# EUROPÄISCHE PATENTSCHRIFT

(11) **EP 2 331 238 B1**
(45) Veröffentlichungstag und Bekanntmachung des Hinweises auf die Patenterteilung: **06.11.2013**
(21) Anmeldenummer: 09744615.7
(22) Anmeldetag: 07.10.2009
(51) Int. Cl.: B01D 53/84, A01G 9/18, C02F 3/32

(54) **VERFAHREN UND EINRICHTUNG ZUR PHOTOSYNTHESEGESTÜTZTEN CO2-ENTSORGUNG**
METHOD AND DEVICE FOR PHOTOSYNTHESIS-SUPPORTED DISPOSAL OF CO2
PROCÉDÉ ET DISPOSITIF D'ÉVACUATION ASSISTÉE PAR PHOTOSYNTHÈSE DE CO2

(30) Priorität: 09.10.2008 DE 102008050974; 24.10.2008 DE 202008014199 U
(43) Veröffentlichungstag der Anmeldung: 15.06.2011
(73) Patentinhaber: Rogmans, Maria, 47546 Kalkar (DE)
(72) Erfinder: WILHELM, Hermann-Josef, 47546 Kalkar (DE)
(74) Vertreter: Schmidt, Karl Michael
(86) Internationale Anmeldenummer: PCT/EP2009/007179
(87) Internationale Veröffentlichungsnummer: WO 2010/043323

(56) Entgegenhaltungen:
- WO-A2-2008/008262
- DE-A1- 3 819 508
- DE-A1-102007 017 933
- US-A- 5 137 625
- US-A1- 2004 259 239
- US-A1- 2005 064 577
- US-A1- 2007 048 859
- US-A1- 2008 135 474

## Beschreibung

Die Erfindung betrifft ein Verfahren, sowie eine Einrichtung zur photosynthesegestützten CO2-Entsorgung.

Zur Kompensation von CO2-haltigen Abgasen bei der Energieerzeugung werden so genannte Emissionsrechte gehandelt, bzw sollen gehandelt werden. Bei dieser Betrachtung wird eine im globalen Maßstab erfasste Emissionsquelle, bspw ein Kohlekraftwerk hinsichtlich der Klimarichtlinie von einer Energieerzeugungsquelle bspw ein Windkraftwerk oder einem Biomassekraftwerk gegenkompensiert, welches CO2-neutrale Energie erzeugt. In Summe soll dann der Anteil des erzeugten Stromes bis 2020 zu 25 % aus regenerativer Energie gebildet werden. Mit anderen Worten heisst dies, dass an einem Ort der Welt CO2 produziert wird und von der Atmosphäre transportiert werden muss, damit sie andernorts wieder regeneriert, d.h. durch Biomasse wieder verstoffwechselt werden kann.

In globaler Summe betrachtet ist dies richtig. Dennoch wird bei genauerer Betrachtung klar, dass die Atmosphäre das emittierte CO2 transportieren muss. Die Atmosphäre wird also auch bei dieser kompensierten CO2-Betrachtung belastet, d.h. zumindest für den Transport. Schon dies führt aber zu negativen Klimaeffekten.

Es sind Verfahren und Einrichtungen zur Einleitung von CO2-haltigem Gas als Dünger in ein Pflanzenanbaufeld bekannt.

Dabei ist gezeigt worden, dass CO₂ durch Bodeneinleitung eine den Pflanzenwuchs enorm steigernde Wirkung hat. Auch die Luftdüngung in Gewächshäusern mit CO₂ oder CO₂-haltigem Gas ist bekannt, und hat die genannte wuchsfördernde Wirkung.

Es ist ebenso zu beachten dass große Mengen CO₂ auch bei anderen Prozessen, auch im Vorfeld der Energierzeugung entstehen. So auch im Umfeld der erneuerbaren Energien. Bei der Nutzung von Biogas ergibt sich zum einen die Möglichkeit dieses mit einem relativ niedrigen Methangehalt von nur 50 bis 55 % zu verbrennen und daraus Energie zu gewinnen. Zum anderen, und wird technologisch immer wichtiger, Biogas auch oftmals nachzubehandeln, d.h. aufzumethanisieren. Dies bedeutet, dass der originäre Methangehalt von 50% auf bis zu 96 % angehoben wird. Hierzu werden bekannte Verfahren verwendet.

Da im originären Biogas das Restgas zu einem erheblichen Teil aus CO₂ besteht, fällt dieses natürlich bei der Methanisierung, also bei der Aufbereitung des Biogases in erheblichen Mengen an.

Das so aufbereitete Biogas hat dann am Ende zwar einen erzielten Methanwert von 96 %, und damit dieselbe Qualität wie Erdgas, aber bis dahin fällt wie gesagt CO₂ an.

Ein weiterer Aspekt, ist dass die Düngemittelpreise tendenziell deutlich steigen. In Bezug auf den Anbau von Biomasse zur Energieerzeugung führen die steigenden Düngemittelpreise zu entsprechenden Kostensteigerungen, die den sogenannten Energieanbau von Biomassepflanzen verteuert.

Weiterhin ist aus der WO/2007/012313 ein Gewächshaus bekannt, in welchem mehrere Etagen vorgesehen sind. Dabei ist dort vorgeschlagen, dass in unteren Etagen sogenannte Anzuchtflächen vorgesehen sind, auf welchen Jungpflanzen angesetzt werden. Später erfolgt dann eine Umschichtung der angewachsenen Jungpflanzen auf höheren Etagen. In Bezug auf die Anzucht neuer Pflanzen mag dies vorteilhaft sein, aber für andere Anwendung ist dies ungeeignet, weil die Umbettung oder Umsetzung der Etagen einen hohen funktionellen aber auch energetischen Aufwand erfordert.

Solche bekannten Konzepte sind auf optimierte Wachstumsbedingungen in einem Gewächshaus appliziert. Dabei sind die einzelnen Vorgehensweisen aber unbrauchbar, wenn es darum geht im Endeffekt eine optimierte CO₂ -Eliminierung zu erreichen.

Aus der WO 2008/008262 A2 sowie aus der US 2007/048859 sind Algenkultureinrichtungen bekannt, in denen eine ökologisch verträgliche Umsetzung von CO2 in Kohlenstoff und Sauerstoff erfolgt. Dabei dienen als CO₂-Quelle Abgase aus Verbrennungsprozessen oder chemischen Prozessen. Gemäß US 2007/048859 A1 wird das Abgas unter Druck in Wasser unter Bildung von in Wasser gelöster Kohlensäure in ein zumindest teilabgeschlossenes System eingeleitet, in welchem schnellwüchsige photosyntheseaktive Biomasse angebaut wird. Die Biomasse, die in flachen, in mehreren Lagen übereinander geschichteten, das eingeleitete aufbereitete Wasser enthaltenden Behältnissen schwimmt, wird zyklisch geerntet, wobei aus verbleibender Biomasse weitere Biomasse sich selbständig vermehrt.

Aus der US 5 137 625 ist eine biologische Wasserbehandlungseinrichtung bekannt, die unter anderem Wasserlinsen verwendet. Dabei werden die Wasserlinsen aber in großen Flächen kultiviert.

Aus US 2004/259239 ist bekannt in flachen, in mehreren Lagen übereinander geschichteten Behältnissen angepflanzte Wasserlinsen zur Biomasseproduktion einzusetzen, wobei die Wachstumsförderung durch Luftdüngung erfolgt.

Der Erfindung liegt somit die Aufgabe zugrunde, ein Verfahren sowie eine Einrichtung dahingehend weiter zu entwickeln, dass an einem Ort durch Energieerzeugung oder durch Aufbereitung von Energieträgern anfallende CO2-Mengen auch ortsnah kompensiert werden.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte Ausgestaltungen des Verfahrens sind in den abhängigen Ansprüchen 2 bis 9 angegeben.

Im Hinblick auf eine Einrichtung der gattungsgemäßen Art ist die Aufgabe erfindungsgemäß durch die Merkmale des Anspruches 10 gelöst.

Weitere vorteilhafte Ausgestaltungen der Einrichtung sind in den übrigen abhängigen Ansprüchen angegeben.

In vorteilhafter Ausgestaltung ist angegeben, dass zumindest ein Teil der geernteten Biomasse zur Energiegewinnung (Biogas, Trockenbrennstoff, Bioethanol, Biodiesel) in den besagten abgaserzeugenden Energiegewinnungsprozess recycliziert wird. Dadurch entsteht ein geschlossener Stoffzyklus, der sogar das bei der Energieerzeugung entstehende CO₂ mit einbezieht.

In weiterer vorteilhafter Ausgestaltung ist angegeben, dass das aus Abgasen angereicherte kohlensäurehaltige Wasser zur Bewässerung der Biomasse bedarfsgeregelt zugeführt wird, indem ein zuführungseitiger Füllstand überwacht wird, derart, dass genau soviel mit Kohlensäure und ggfs mit Nährmedien aufbereitetes Wasser nachgeführt wird, wie von der Biomasse aufgenommen und verstoffwechselt wird. Damit entsteht eine optimierte Wuchsförderung einerseits und eine kontrollierte Erntbarkeit der Biomasse andererseits.

Zusätzlich kann die Biomasse aus Weizen, oder ähnlichen Keimsaaten bestehen, welche in flachen Wannen auf dem genannten eingeleiteten aufbereiteten Wasser schwimmen. Hierbei können spezielle Fliese verwendet werden, an denen sich die feinen Wurzel festhalten können.

Wasserlinsen sowie auch Keimsaaten sind also in sehr kurzen Zeitabständen erntbar.

Diese Pflanzen können alternativ zur Energie- oder chemischen Verwertung auch zu Futterzwecken nachbehandelt werden.

Insgesamt sind damit aber Pflanzen verwendet, die nicht nur einen erhebliche Menge CO₂ verstoffwechseln, sondern die auch ein solches Inhaltstoffspektrum aufweisen, dass beispw bei der Trockung und Direktverbrennung, oder aber als Substrat zur Biogaserzeugung optimale Gasraten erzeugt werden.

Damit ergibt sich eine funktionelle Synergie darin, dass zum einen die Biomasse erhebliche Mengen CO₂ aufnimmt und andererseits energiereiche Biomasse erzeugt.

Auf diese Weise ergibt sich dann ein erheblicher Vorteil in der ortsnahen Anordnung einer solchen erfindungsgemäßen Einrichtung an dem Erzeugungsort von CO₂ Abgasen, die aus der Verwertung genau dieser Biomasse stammt.

Im Ergebnis ist dies letztendlich ein geschlossener Energieerzeugungsprozess mit näherungsweise dauerhafter CO₂-Neutralisierung.

In weiterer vorteilhafter Ausgestaltung ist angegeben, dass ein Teil der Biomasse aus Kresse (Keimsaat) besteht, welche in flachen Wannen auf dem genannten eingeleiteten aufbereiteten Wasser schwimmen, bzw in dem erwähnten Fliesmaterial.

In weiterer vorteilhafter Ausgestaltung ist angegeben, dass die Erntung der Biomasse derart erfolgt, dass die steigende Population der Biomasse in den jeweiligen flächenmäßig limitierten Wannen nach einer Wachstumszeit ein seitliches Herausfallen der überzählige Biomasse über eine abgesenkte Kante der Wannen bewirkt, und dass diese dabei kontrolliert auf einen Fördereinrichtung fällt und zur Weiterverarbeitung gefördert wird. Auf diese einfache Weise wird im Prinzip die "kontrollierte Wucherung" der Biomasse ausgenutzt. Dabei kann die automatische Erntung auch durch einfache Kippung der Wannen , so dass mit dem abfließenden Wasser auch eine entsprechende Menge Biomasse, z.B. Wasserlinsen abfließen, und auf ein Förderband fallen und aus dem System heraustransportiert wird.

Dadurch dass mehrere Lagen von Wannen übereinandergeschichtet sind, soweit ein ausreichender Tageslichteinfall zur Photosynthese gewährleistet ist. So ergibt sich eine kompakte Bauform, bei welcher in einem gegebenen Raum ein maximaler Stoffwechselumsatz von CO₂ erfolgt und eine flächenoptimierte Menge von verwertbarer Biomasse entsteht.

Hierbei ist beobachtet worden, dass sich Wasserlinsen schon bei 50 Lux vermehren. Oder anders gesagt, schon bei 50 Lux Beleuchtungstärke/Lichtstärke ist die Vermerhung nicht mehr Null. Der obere Grenzwert liegt bei etwa 3500 Lux. Bei höheren Beleuchtungsstärken verbrennen die Wasserlinsen.

In weiterer vorteilhafter Ausgestaltung ist angegeben, dass zur künstlichen Tageslichtverlängerung den Pflanzen in Dunkelphasen Licht, insbesondere UV-Licht zugeführt wird. Dabei ist ein Lichtspektrum mit einer Wellenlänge von ca 450 Nanometer bis 700 Nanometer optimal, und enthält alle wichtigen Wellenlängenanteile für eine optimale Photosynthese. Hierdurch werden Wachstumsphasen und damit auch CO₂-aktive Stoffwechselphasen auch in die Nachtzeiten verlängert, wodurch sich die Effizienz eines solchen Verfahrens und einer solchen Einrichtung erheblich steigern lässt.

In weiterer vorteilhafter Ausgestaltung ist angegeben, dass zusätzlich zur Wässerung mit dem besagten aufbereiteten kohlesäurereichen Wasser dasselbe im Kaltnebelverfahren in das besagte, zumindest teilabgeschlossene System eingeleitet wird. Hierzu wird entspanntes, mit Kohlensäure angereichertes Wasser in den Gasraum, also nicht in die Flüssigkeit des teilabgeschlossenen Systems eingeleitet. Dabei wird von dem Blattwerk der Biomassepflanzen, das CO₂ ebenfalls aufgenommen.

Teilabgeschlossenes System bedeutet hierbei, dass der Raum um die Pflanzen zwar allseitig von insbesondere Lichtdurchlässigen oder Lichtaktiven Wänden umgeben ist. Gase können jedoch kontrolliert abgelassen werden. Das heißt, dass zum einen überschüssiges nicht verstoffwechseltes CO₂, aber andererseits auch von den Pflanzen durch Photosynthese erzeugter Sauerstoff kontrolliert, bspw über steuerbare Ventile oder Klappen entweichen kann.

In letzter verfahrensgemäßer Ausgestaltung ist angegeben, dass das Verfahren unterirdisch in Bergwerken oder unterirdischen Höhlen angewendet wird, indem unterirdisch eingeleitetes oder entstehendes Abgas oder CO₂ dort abgefangen und in der beschriebenen Weise in mit Biomasse gefüllten und künstlich beleuchteten Behältnissen zur photosynthesegestützten CO₂ Verstoffwechselung geleitet wird. Diese vorteilhafte Ausgestaltung korrespondiert mit dem speziellen Problem, welches die derzeit technologische Entsorgung von CO₂ durch Einpumpung in die Erde betrifft. Die derzeit versuchsweise Einpumpung von CO₂ haltigen Abgasen oder von aus Abgas erhaltenem CO₂ in die Erde birgt das Risiko, dass das dort eingeschlossene CO₂ durch geothermische Einflüsse oder durch seismische Einflüsse schubweise und dann in großen Mengen freigesetzt werden kann. Bei dieser Ausgestaltung wird in der Nähe solcher CO₂-bepumpten Lagerstätten in dort vorhanden Hohlräumen wie Höhlen oder Bergwerken das dort stetig aufsteigende CO₂ durch die Biomasse in der beschriebenen Weise verstoffwechselt und damit dauerhaft gebunden. Die so CO₂-gedüngte anfallende Biomasse wird dann nach oben transportiert und dort als Proteinträger etc oder als Biogassubstrat weiterverarbeitet. Mit Hilfe dieser Energiegewinnung kann dann die unterirdische Beleuchtung zur Photosynthese betrieben werden. So bleibt auch dieser Energieaufwand CO₂ neutral und die Enrichtung finanziert sich somit selbst, durch Inhaltsstoffe und/oder überschüssige Energie.

Die erfindungsgemäße Einrichtung ist in Anspruch 10 definiert.

In weiterer vorteilhafter Ausgestaltung ist angegeben, dass die Wannen der Etagen zur verbesserten gleichmäßigen Lichtzufuhr zumindest teilweise zueinander versetzt platziert sind. So ist gewährleistet, dass eine Vielzahl von Etagen übereinander liegen können und dennoch optimal mit Licht ausgeleuchtet werden können, und zwar in dem Maßen, dass die photosynthese schlechtestenfalls noch gerade in Gang gehalten wird.

In weiterer vorteilhafter Ausgestaltung ist angegeben, dass das teilabgeschlossene System eine oder mehrere Ventil- oder Klappeneinrichtungen enthält, über welche überflüssiges Gas -Sauerstoff, und nicht verstoffwechseltes Gas- kontrolliert abgelassen werden können. Hierdurch wird der Tatsache Rechnung getragen, dass der durch Photosynthese produzierte Sauerstoff auch entweichen kann. Ebenso der möglicherweise verbleibende nicht verstoffwechselte kleine Anteil an CO₂. Damit wird zum einen verhindert, dass sich ein für die Pflanzen schädlicher Druck aufbaut, und außerdem im sozusagen gebildeten Wachstumsraum immer ein für das Wachstum und den Stoffwechsel der Pflanzen optimal hoher CO₂-Anteil besteht.

In weiterer vorteilhafter Ausgestaltung ist angegeben, dass das Dach und/oder alle Seitenwände als Pyramide oder pyramidaler Körper ausgestaltet sind. Hierdurch entsteht eine einerseits einfache Bauform, bei anderseits maximierter Lichteinfallsfläche. Auf diese Weise kann durch Schichtung der Wannen in Etagen die Grundfläche optimal genutzt werden, während dem auch eine optimale Lichteinfallsfläche für Tageslicht entsteht. Außerdem fügen sich dabei die lichtdurchfluteten Pyramiden in besonderes verträglicher Weise in eine Landschaft ein. Außerdem gleitet an allen Seiten auftreffender Wind optimal ab, so dass dies die Statik beim Bau hoher Pyramiden dieser Art begünstigt.

Neben der Pyramidalform sind natürlich auch andere Bauformen möglich, die einen hohen Lichteinfall gewährleisten. So z.B. auch runde Grundfläche mit konischem Dach, oder elliptische Grundfläche mit entsprechendem spitz zulaufendem Dach.

In weiterer vorteilhafter Ausgestaltung ist angegeben, dass eine zusätzliche Beleuchtungseinrichtung vorgesehen ist, mittels welcher auch in Nachtzeiten Licht, insbesondere UV-reiches Licht zuführbar ist. Hierdurch werden der Wuchszyklus und damit sowohl die Massenerträge als auch die Zykluszeiten bei der Vermehrung der selbsttätigen der Pflanzen optimiert.

In weiterer vorteilhafter Ausgestaltung ist angegeben, dass die Beleuchtungseinrichtung aus einem mit Solarstrom oder mit aus Restwärmenachverstromung gewonnenem elektrischen Strom geladenem Akkumulator gespeist ist. Auf diese Weise bleibt auch der unterstützende Kunstlichtbetrieb CO₂-neutral.

In weiterer vorteilhafter Ausgestaltung ist angegeben, dass das teilabgeschlossene System als transportabler Container ausgestaltet ist, der zumindest dachseitig aus lichtdurchlässigem insbesondere licht- oder UV-lichtdurchlässigem Material besteht.

Hierbei sei ergänzend erwähnt, dass die Definition Lichtoder UV-Lichtdurchlässig auch das Spektrum von 450 bis 700 Nanometer Wellenlänge erfassen soll.

In weiterer vorteilhafter Ausgestaltung ist angegeben, dass der Container oder zumindest die lichtdurchlässigen Wand- und Deckenbestandteile nach Art eines klappbaren Transportcontainers zum Zweck des Transportes desselben zusammenlegbar/zusammenfaltbar und vor Ort zum bestimmungsgemäßen Gebrauch wieder aufklappbar sind.

In weiterer vorteilhafter Ausgestaltung ist angegeben, dass auch die Energieerzeugungs-, oder Biogaseinrichtung, oder die Bioenthanol-Erzeugungseinrichtung, sowie der oder die Druckspeicher jeweils in transportablen Containern untergebracht sind.

In weiterer vorteilhafter Ausgestaltung ist angegeben, dass das teilabgeschlossene System in einem stationären, lichtdurchlässigen insbesondere UV-lichtdurchlässigen Raum, in der Art eines mobilen oder stationären Gewächshauses angeordnet ist.

In weiterer vorteilhafter Ausgestaltung ist angegeben, dass das teilabgeschlossene System, d.h. die Einrichtung in einer gegrabenen Bodengrube auf einem Feld eingesenkt ist und von oben mit einem lichtdurchlässigen, insbesondere einem UV-lichtdurchlässigen Dach, oder einer lichtdurchlässigen, insbesondere UV-lichtdurchlässigen Folie abgedeckt ist.

In weiterer vorteilhafter Ausgestaltung ist angegeben, dass das Dach pyramidal ausgestaltet ist.

In letzter vorteilhafter Ausgestaltung ist angegeben, dass die Einrichtung zur Entsorgung von CO₂ oder CO₂-haltigen Abgasen in einer unterirdischen Erdhöhle oder einem Bergwerk platziert ist. Damit wird das Verfahren nach Anspruch 11 umgesetzt.

Weiterhin ist ausgestaltet, dass die Wannen als im Querschnitt polygonale, um eine Achse drehbare Körper ausgestaltet sind, welche öffenbar sind, und die Biomasse, bspw Wasserlinsen mit einem Schaber entnehmbar sind. Es können auch Panelförmige Hohlkörper gebildet werden, und durch die Drehung wird bewirkt, dass reife Wasserlinsen an den seitlichen Wänden nach dem Drehen anhaften und mit einem Schaber abgestreift werden können.

Weiterhin ist vorteilhaft ausgestaltet, dass die Wannen innen mit einem Lichtsensor versehen sind, derart, dass darüber das Erreichen einer von Biomasse- bzw Wasserlinsen geschlossenen Oberfläche erfassbar und die Erntung einleitbar ist. Es ist nämlich beobachtet worden, dass wenn Wasserlinsen die gesamte Oberfläche bedecken, das weitere Vermehrungswachstum rückläufig ist. Man spricht dabei von Wachstumsdepression.

Dies spezielle Ausgestaltung besteht darin, dass die Einrichtung ein Gewächshaus mit Pflanzwannen oder Pflanzgefäßen umfasst, welche mit Wasser- oder Sumpfpflanzen als Biomasse bepflanzt sind, und dass zur Wasserversorgung eine Einspeisung von Thermalquellenwasser und/oder Industrieabwasser und/oder Klärwasser und/oder Bergwerksgrubenwasser vorgesehen ist. Durch die Zuleitung solcher Wässer wird zum einen thermische Energie und zum anderen werden auch verwertbare chemische Inhaltsstoffe zugeführt. Beim Einsatz von Wasserpflanzen und der Zugabe der genannten "Abfallwässer" ist automatisch eine Düngemittelgabe bewirkt. Außerdem bewirken die Wässer, die auch thermische Energie mit sich führen, dass ein ganzjähriger Wachstumszyklus erreicht wird und damit hohe ganzjährige Biomasseerträge aus den Wasserpflanzen anfallen. Insgesamt wird so aus Abwässern energetisch und chemisch wertvolle Biomasse gewonnen.

In weiterer vorteilhafter Ausgestaltung ist angegeben, dass das Gewächshaus aus einem entkernten Fabrikhallengebäude, oder aus einem entkernten Hochhaus, oder aus einem entkernten Kühlturm eines Kraftwerkes, oder aus einem entkernten Wasserturm besteht, welcher bzw welches mit Glas oder lichtdurchlässiger Folie versehen ist. So können bestehende Industrieruinen entkernt und so einer wertvollen neuen Nutzung zugeführt werden.

In weiterer vorteilhafter Ausgestaltung ist angegeben, dass das Gewächshaus aus einem zylindrischen Gebäude, oder im Querschnitt polygonalen Gebäude besteht, welches mit lichtdurchlässiger Folie oder Glas versehen ist, und den Standturm eines Windkraftwerkes umgibt. Bei diesem Beispiel werden die hoch aufragenden Türme von Windkraftanlagen hocheffizient genutzt, indem sich die erfindungsgemäßen Gewächshäuser quasi daran hoch aufstellen.

Dabei wird nur eine kleine Grundfläche benötigt. Das Volumen durch die erzielbare Höhe ist dabei maßgebend. So werden umliegende Ackerfläche erst gar nicht beaufschlagt. Die durch die Windkraftwerke verfügbare erneuerbare Energie kann dabei zum Teil zum automatischen Erntebetrieb und Aufbereitungsbetrieb der Biomasse in diesen Turm-Gewächshäusern genutzt werden.

In weiterer vorteilhafter Ausgestaltung ist angegeben, dass die Einrichtung in direkter Nähe zu einer Thermalquelle, oder einem Industriebetrieb, oder einem Klärwerk oder einer Bergwerksgrube platziert ist. Dort fällt das besagte Wasser in kurzer Entfernung an.

In weiterer vorteilhafter Ausgestaltung ist angegeben, dass das Gewächshaus als Pyramide, oder als pyramidaler Körper oder als Quader gestaltet ist.

In weiterer vorteilhafter Ausgestaltung ist angegeben, dass zur automatischen Beerntung der Biomasse Schieberelemente, oder eine als Luftbesen bezeichnete Luftdüsenanordnung vorgesehen ist, welche die Biomasse aus den Wannen oder Pflanzgefäßen abstreifen oder durch gezielte Druckluftbeaufschlagung herausschleudert, um die Biomasse einer Fördereinrichtung zuführen.

In weiterer vorteilhafter Ausgestaltung ist angegeben, dass die Einrichtung eine Biogas-, oder Bioethanolerzeugungseinrichtung, oder eine Wasserstoffherstellungseinrichtung umfasst, in welcher aus der geernteten Biomasse Energieträger erzeugbar sind, und die Abgase und/oder die Abwässer und/oder die Abwärme wieder ins Gewächshaus rückführbar ist.

In weiterer vorteilhafter Ausgestaltung ist angegeben, dass die Biogas- und/oder Bioethanolerzeugungseinrichtung direkt in der Einrichtung zur Erzeugung der Biomasse integriert oder implementiert ist.

In weiterer vorteilhafter Ausgestaltung ist angegeben, dass die Abgase der Biogas- und/oder Bioethanolerzeugungseinrichtung zusätzlich zur CO₂-reichen Luftdüngung der Biomasse über eine Abgasrückführung in das Gewächshaus leitbar sind.

In weiterer vorteilhafter Ausgestaltung ist angegeben, dass innerhalb des Gewächshauses ein oder mehrere Fischzuchtbecken angeordnet sind, in welches das zunächst durch die Pflanzwannen oder Pflanzgefäße geleitete Wasser/Abwasser et vice versa zuführbar ist.

Bezüglich einer möglichen weiteren Verwendung ist angegeben, dass das Verfahren bzw die Einrichtung für den Betrieb eines Klärbeckens einer Kläranlage eingesetzt wird. So wird das in Klärbecken, Rührbecken undd Absetzbecken anfallende CO₂ sofort biologisch in den Wasserlinsen bzw der Biomasse gebunden.

Eine weitere Verwendung ergibt sich in Bergwerksgruben, oder geologischen Höhlungen, in welche CO2 eingepresst wird, d.h. dass das Verfahren und/oder die Einrichtung zur CO₂- Entgasung einer Abbaugrube, insbesondere einer Kohlegrube eingesetzt wird, indem das entstehende CO₂-haltige Abgas gesammelt und in Wasser unter Bildung von Kohlensäure unter Druck eingesprudelt wird, und das kohlensäurehaltige Wasser zur Düngung verwendet wird.

Eine letzte Verwendung betrifft die CO₂-Entsorgung in Wohnhäusern, nämlich dass das Verfahren und/oder die Einrichtung beim Anfall von CO₂-haltigem Abgas in den Heizanlagen von Wohnhäusern verwendet wird, derart, dass das Abgas unter Druck und Bildung von kohlesäurehaltigem Wasser in Wasser eingesrudelt wird, und über Druckleitungen zur weiteren Verwendung abgeführt wird.

Ausgestaltungen der Erfindung sind in der Zeichnung dargestellt.

Es zeigt:
Figur 1 Prinzipieller Aufbau
Figur 2 Anwendung als transportables System
Figur 3 Anwendung in Bodeneinsenkung
Figur 4: Darstellung eines Gewächshausturmes um den Turm einer Windkraftanlage

Grundsätzlich gilt auch für das oben Gesagte, dass bei druckaufgeladener Einleitung von CO₂ in Wasser also im wesentlichen in H₂O gelöste Kohlensäure, d.h. H₂CO₃ in Wasser entsteht. So wird das CO₂ bei der genannten Einleitung in Wasser unter Druck zu dieser genannten gelösten Kohlensäure.

Erfindungsgemäß wird zur Herstellung von kohlesäurereichem Wasser das Kohlendioxid aus ABGASEN verwendet, um damit dann die Düngung der Biomasse vorzunehmen.

Bei der Verwendung von Wasserlinsen aber auch der sogenannten Wasserhexe wird regelmäßig geerntet. Bei Wasserlinsen sind dies alle 5 bis 14 Tage.

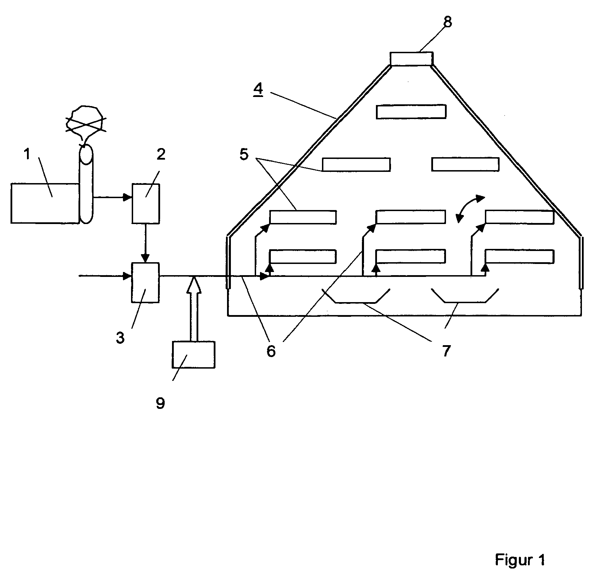

Figur 1 zeigt ein erstes prinzipielles Ausgestaltungsbeispiel. Die Abgase einer Abgas-, bzw Industrieanlage 1 werden nicht durch den Schornstein geschickt, sondern zunächst durch einen Gaswäscher 2. Sodann wird das CO₂-haltige Abgas in einen Druckspeicher 3 gegeben, bei dem unter Druck, von etwa 1 bis 10 Bar Wasser mit zugegeben wird, so dass sich Kohlensäure in Wasser bildet. Dabei wird der Anteil CO₂ von 0,05 bis 0,5 Gramm pro Liter Wasser eingestellt, weil diese Wertespanne optimal düngt und gleichzeitig eine Übersäuerung der Biomasse ausschließt. Sodann wird das aus Abgas gewonnene kohlensäurehaltige Wasser über ein Rohrleitungssystem 6 in die besagten Wannen 5 geleitet. Dabei wird der Füllstand so kontrolliert, dass immer nur soviel Wasser nachgeführt wird, wie verbraucht wird, verdampft und ggfs von der Pflanze verstoffwechselt wird. Die Wannen sind dabei in einem teilabgeschlossenen System angeordnet, welches aus einer lichtdurchlässigen Wandung 4 besteht. Dieses System ist dabei wie hier bspw pyramidal ausgestaltet, so dass eine optimale lichteinwirkende Oberfläche für die besagte Photosynthese entsteht. Gleichzeitig wird auch noch kohlensäurehaltiges Wasser innerhalb dieses System entspannt, so dass Kohlensäure wieder als CO₂ ausgast (weil diese Vorgang reversibel ist) und innerhalb dieses mit Biomasse gefüllten Raumes auch zusätzlich CO₂ Luftdünger angeboten wird. Die Wannen 5 sind hierbei bspw kippbar, so dass wenn diese Oberfläche bspw mit Wasserlinsen sich schlüssig gebildet hat, dieselben durch Kippung teilweise abgeschüttet werden. Hierzu ist im Boden der Wannen 5 jeweils ein Lichtsensor angeordnet, der dann nahezu vollständig abgedunkelt wird, wenn die Oberfläche vollständig zugewachsen ist und geerntet werden muss.

Unten ist eine Fördereinrichtung, so dass die abgeschütteten Wasserlinsen automatisch gesammelt und zur Weiterverabreitung herausgefördert werden können.

Oben am pyramidalen Körper, der das teilabgeschlossene System darstellt, ist eine Ablassklappe 8 oder ein Ablassventil angeordnet, damit überschüssiges Gas, d.h. auch durch Photosynthese gebildeter Sauerstoff oben abgeführt werden kann.

Auch können die Abwässer einer Industrieanlage 1 verwendet werden ggfs, in einem Filter 2 vorgefiltert, und ggfs aber nicht zwingend frisches Wasser 3 zugemischt und den Pflanzwannen 5 im Gewächshaus zugeführt. Dies geschieht über ein Rohrleitungssystem 6

Ebenso kann Thermalwasser oder Grubenwasser aus Bergwerken zugeführt werden. Neben dem Eintrag dieser Wässer erfolgt dabei natürlich auch die Zuführung von Wärme, weil diese Wässer natürlich temperiert sein können.

Die nach einer bestimmten Wachstumszeit von mehreren Tagen anfallende Biomasse kann dabei über Abstreifer oder über Luftbesen geerntet werden, und die Biomasse fällt dabei in Förderbänder 7.

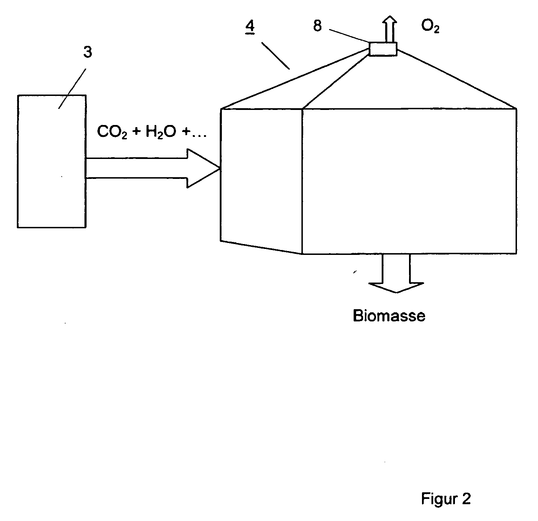

Figur 2 zeigt ein Ausgestaltungsbeispiel, bei welchem ein quasi als biologisches CO₂-Abgaskatalysator arbeitendes System als Container, insbesondere als transportabler Container ausgebildet ist. Dies dient dem mobilen Einsatz.

Der Container 4 kann dabei sogar aus klappbaren Wandelementen bestehen. Auch hierbei wird die anfallende starkwüchsige Biomasse (Wasserlinsen) abgezogen.

Das Abgas kann dabei von stationären aber auch mobilen Abgaserzeugern stammen.

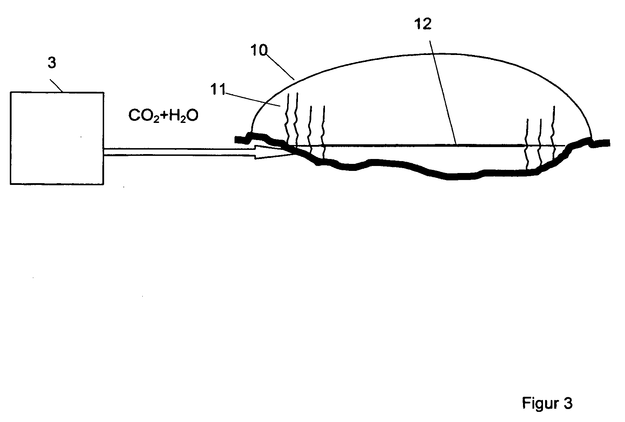

Figur 3 zeigt eine Ausgestaltung, bei welcher das Verfahren in einer Bodensenke oder einem See angewendet wird. Dabei wird die Biomasse 12 hauptsächlich aus Wasserlinsen bestehend auf der Wasseroberfläche erzeugt, und randseitig mit schilfartigen Pflanzen 11 begrenzt. Das erfindungsgemäß gebildete kohlensäurehaltige Wasser wird hierbei in den See eingespeist, und gast dort durch Druckentspannung ebenso aus, wie in den oben erwähnten teilabgeschlossenen Systemen und bewirkt eine erhebliche Wuchsförderung. Dabei wird der See bzw die Bodensenke mit einer lichtdurchlässigen (wie oben ausgeführt) Folie 10 abgedeckt, um auch dadurch ein teilabgeschlossenes System zu erzeugen. Diese Ausgestaltung hat biotopischen Charakter und bindet in der gleichen Weise durch extrem wüchsige Biomasse einerseits CO₂ aus Abgasen und anderseits kann die erzeugte Biomasse auch hier in den genannten kurzen Zeitzyklen geerntet, d.h. abgeschöpft und in entsprechender Weise weiterverarbeitet werden.

Insbesondere diese Ausgestaltung kann auch bei Klärbecken in Kläranlagen verwendet werden, wie oben bereits angeführt.

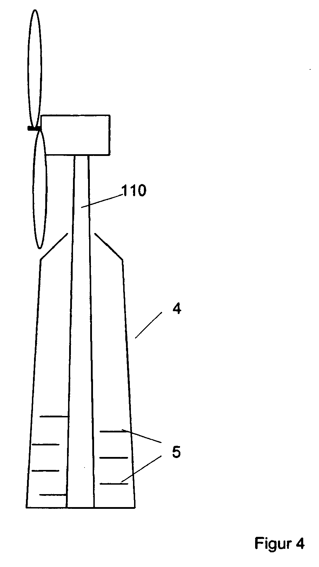

Figur 4 zeigt ein Ausführungsbeispiel, bei dem das erfindungsgemäße Gewächshaus um den Turm 110 eines Windkraftwerkes 100 gebaut ist. Dabei ist das Gewächshaus 4 hoch aufgerichtet und darin sind die etagenweise gestapelten Pflanzgefäße oder Pflanzwannen angeordnet. Hierbei wird nur eine vergleichsweise geringe Grundfläche benötigt und dennoch ein großes nutzbares Volumen geschaffen. Auch der Lichteinfall ist bei dieser hoch aufstrebenden Bauform optimal. Durch optimale Lichtnutzung wird ein optimales Wachstum erzielt.

### Bezugszeichen

- 1: Abgasanlage
- 2: Gaswäscher
- 3: Druckspeicher
- 4: Licht- / UV-licht-durchlässige Wandung
- 5: Pflanzenwannen
- 6: Wasser mit Kohlensäure
- 7: Fördereinrichtung für Biomasse
- 8: Ablassklappe / - ventil
- 9: Zuleitung von Gruben- oder Thermalwasser

- 10: Folie, licht-/UV-lichtdurchlässig

- 11: Randbepflanzung

- 12: Wasserlinsen

- 100: Windkraftanlage
- 110: Turm der Windkraftanlage

## Patentansprüche

1. Verfahren zur biologischen und ökologisch verträglichen Umsetzung von CO₂ in Kohlenstoff und Sauerstoff. wobei als CO₂-Quelle Abgase aus Verbrennungsprozessen oder chemischen Prozessen dienen, bei welchem das Abgas unter Druck in Wasser unter Bildung von in Wasser gelöster Kohlensäure in ein zumindest teilabgeschlossenes System eingeleitet wird, in welchem schnellwüchsige photosyntheseaktive Biomasse in Form von Wasser- oder Sumpfpflanzen angebaut wird, wobei
zumindest ein Teil der Biomasse aus Wasserlinsen besteht, welche in flachen, in mehreren Lagen übereinandergeschichteten Wannen, auf dem genannten eingeleiteten aufbereiteten Wasser schwimmen derart, dass ein ausreichender Tageslichteinfall zur Photosynthese gewahrleistet ist, und wobei die Biomasse zyklisch geerntet wird und aus verbleibender Biomasse weitere Biomasse sich entweder selbsttätig vermehrt, oder zyklisch nachgefüllt wird.

2. Verfahren nach Anspruch 1,
**dadurch gekennzeichet,**
dass zumindest ein Teil der geernteten Biomasse zur Energiegewinnung insbesondere in Form von Biogas, Trockenbrennstoff, Bioethanol, Biodiese1 in den besagten abgaserzeugenden Energiegewinnungsprozess recycliziert wird.

3. Verfahren nach Anspruch 1 oder 2,
**dadurch gekennzeichnet,**
**dass** das aus Abgasen angereicherte kohlesäurehaltige Wasser zur Bewässerung der Biomasse bedarfsgeregelt zugeführt wird, indem ein Füllstand überwacht wird, derart genau soviel aufbereitetes Wasser nachgeführt wird, wie von der Biomasse aufgenommen und verstoffwechselt wird.

4. Verfahren nach einem der Ansprüche 1 bis 3,
**dadurch gekennzeichnet,**
**dass** ein Teil der Biomasse aus Weizen, oder ähnlichen Keimsaaten besteht, welche in flachen Wannen auf dem genannten eingeleiteten aufbereiteten Wasser schwimmen.

5. Verfahren nach einem der Ansprüche 1 bis 3,
**dadurch gekennzeichnet,**
**dass** ein Teil der Biomasse aus Kresse besteht, welche in flachen Wannen auf dem genannten eingeleiteten aufbereiteten Wasser schwimmen.

6. Verfahren nach Anspruch 1, 2 oder 3,
**dadurch gekennzeichnet,**
**dass** die Erntung der Biomasse derart erfolgt, dass die steigende Population der Biomasse die jeweiligen flächenmäßig limitierten Wannen nach einer Wachstumszeit ein seitliches Herausfallen der überzählige Biomasse über eine abgesenkte Kante der Wannen bewirkt, und dass diese dabei kontrolliert auf einen Fördereinrichtung fallen und zur Weiterverarbeitung gefördert werden.

7. Verfahren nach einem der vorhergehenden Ansprüche,
**dadurch gekennzeichnet,**
**dass** zur künstlichen Tageslichtverlängerung den Pflanzen in Dunkelphasen Licht, insbesondere UV-Licht zugeführt wird.

8. Verfahren nach einem der vorhergehenden Ansprüche,
**dadurch gekennzeichnet,**
**dass** zusätzlich zur Wässerung mit dem besagten aufbereiteten kohlesäurereichen Wasser dasselbe im Kaltnebelverfahren in das besagte, zumindest teilabgeschlossene System eingeleitet wird.

9. Verfahren nach einem der vorhergehenden Ansprüche,
**dadurch gekennzeichnet,**
**dass** das verfahren unterirdisch in Bergwerken oder unterirdischen Höhlen angewendet wird, indem unterirdisch eingeleitetes oder entstehendes Abgas oder CO₂ dort abgefangen und in der beschriebenen Weise in mit Biomasse gefüllten und künstlich beleuchteten Behältnissen zur photosynthesegestützten CO₂ Verstoffwechselung geleitet wird.

10. Einrichtung zur biologischen Umsetzung von CO₂ in Kohlenstoff und Sauerstoff, zur Durchführung des verfahren nach einem der Ansprüche 1 bis 9, aufweisend
ein teilabgeschlossenes System in Form eines aus mehreren Etagen bestehenden Gewächshauses, in welchem schnellwüchsige photosyntheseaktive Biomasse in Form von Wasser- oder Sumpfpflanzen in wassergefüllten flachen Pflanzwannen (5) in einer Vielzahl von Etagen in einem Regal- oder Stellagen-System angepflanzt ist, einen Druckspeicher, mittels dessen als CO₂-Quelle dienende, anfallende Abgase aus einem Verbrennungs- oder einem chemischen Prozess in Wasser zur Herstellung von kohlesäurehaltigem Wasser einbringbar sind, und eine Regeleinrichtung, über die dieses Wasser den flachen Behältnissen in der Menge des von der Biomasse aufgenommenen Wassers zuführbar ist.

11. Einrichtung nach Anspruch 10,
**dadurch gekennzeichnet,**
**dass** die Wannen der Etagen zur verbesserten gleichmäßigen Lichtzufuhr zumindest teilweise zueinander versetzt platziert sind.

12. Einrichtung nach Anspruch 10 oder 11,
**dadurch gekennzeichnet,**
**dass** das teilabgeschlossene System eine oder mehrere Ventil- oder Klappeneinrichtungen enthält, über welche überflüssiges Gas -Sauerstoff, und nicht verstoffwechseltes Gas- kontrolliert abgelassen werden können.

13. Einrichtung nach einem der Ansprüche 10 bis 12,
**dadurch gekennzeichnet,**
**dass** das Dach und/oder alle Seitenwände als Pyramide oder pyramidaler Körper ausgestaltet sind.

14. Einrichtung nach einem der Ansprüche 10 bis 12,
**dadurch gekennzeichnet,**
**dass** eine zusätzliche Beleuchtungseinrichtung vorgesehen ist, mittels welcher auch in Nachtzeiten Licht, insbesondere UV-reiches Licht zuführbar ist.

15. Einrichtung nach Anspruch 14,
**dadurch gekennzeichnet,**
**dass** die Beleuchtungseinrichtung aus einem mit Solarstrom oder mit aus Restwärmenachverstromung gewonnenem elektrischen Strom geladenem Akkumulator gespeist ist.

16. Einrichtung nach einem der vorhergehenden Ansprüche 10 bis 15,
**dadurch gekennzeichnet,**
**dass** das teilabgeschlossene System als transportabler Container ausgestaltet ist, der zumindest dachseitig aus lichtdurchlässigem insbesondere UV-lichtdurchlässigem Material besteht.

17. Einrichtung nach Anspruch 16,
**dadurch gekennzeichnet,**
**dass** der Container oder zumindest die lichtdurchlässigen Wand- und Deckenbestandteile nach Art eines klappbaren Transportcontainers zum Zweck des Transportes desselben zusammenlegbar/zusammenfaltbar und vor Ort zum bestimmungsgemäßen Gebrauch wieder aufklappbar sind.

18. Einrichtung nach Anspruch 16 oder 17,
**dadurch gekennzeichnet,**
**dass** auch die Energieerzeugungs-, oder Biogaseinrichtung, oder die Bioenthanol-Erzeugungseinrichtung, sowie der oder die Druckspeicher jeweil transportablen Containern untergebracht sind.

19. Einrichtung nach einem der vorhergehenden Ansprüche 10 bis 17,
**dadurch gekennzeichnet,**
**dass** das teilabgeschlossene System in einem stationären, lichtdurchlässigen insbesondere UV-lichtdurchlässigen Raum, in der Art eines mobilen oder stationären Gewächshauses angeordnet ist.

20. Einrichtung nach einem der vorhergehenden Ansprüche 10 bis 17,
**dadurch gekennzeichnet,**
**dass** das teilabgeschlossene System, d.h. die Einrichtung in einer gegrabenen Bodengrube auf einem Feld eingesenkt ist und von oben mit einem lichtdurchlässigen, insbesondere einem UV-lichtdurchlässigen Dach, oder einer lichtdurchlässigen, insbesondere UV-lichtdurchlässigen Folie abgedeckt ist.

21. Einrichtung nach einem der vorhergehenden Ansprüche 10 bis 17,
**dadurch gekennzeichnet,**
**dass** das Dach pyramidal ausgestaltet ist.

22. Einrichtung nach einem der vorhergehenden Ansprüche 10 bis 21,
**dadurch gekennzeichnet,**
**dass** die Einrichtung zur Entsorgung von CO₂ oder CO₂-haltigen Abgasen in einer unterirdischen Erdhöhle oder einem Bergwerk platziert ist.

23. Einrichtung nach einem der vorhergehenden Ansprüche 10 bis 22,
**dadurch gekennzeichnet,**
**dass** die Wannen als im Querschnitt polygonale, um eine Achse drehbare Körper ausgestaltet sind, welche öffenbar sind, und die Biomasse Wasserlinsen mit einem Schaber entnehmbar sind.

24. Einrichtung nach einem der Ansprüche 10 bis 22,
**dadurch gekennzeichnet,**
**dass** die wannen innen mit einem Lichtsensor versehen sind, derart, dass darüber das Erreichen einer von der Biomasse geschlossenen Oberfläche erfassbar und die Erntung einleitbar ist.

25. Einrichtung nach einem der vorhergehenden Ansprüche 10 bis 24,
**dadurch gekennzeichnet,**
**dass** zur Wasserversorgung eine Einspeisung von Thermalquellenwasser (9) und/oder Industrieabwasser (2) und/oder Klärwasser (2) und/oder Bergwerksgrubenwasser (9) vorgesehen ist.

26. Einrichtung nach Anspruch 25,
**dadurch gekennzeichnet,**
**dass** das Gewächshaus (4) aus einem entkernten Fabrikhallengebäude, oder aus einem entkernten Hochhaus, oder aus einem entkernten Kühlturm eines Kraftwerkes, oder aus einem entkernten Wasserturm besteht, welcheer bzw welches mit Glas oder lichtdurchlässiger Folie versehen ist.

27. Einrichtung nach Anspruch 25,
**dadurch gekennzeichnet,**
**dass** das Gewächshaus (4) aus einem zylindrischen Gebäude, oder im Querschnitt polygonalen Gebäude besteht, welches mit lichtdurchlässiger Folie oder Glas versehen ist, und den Standturm (11) einer Windkraftanlage (10) umgibt.

28. Einrichtung nach Anspruch 25,
**dadurch gekennzeichnet,**
**dass** die Einrichtung in direkter Nähe zu einer Thermalquelle, oder einem Industriebetrieb, oder einem Klärwerk oder einer Bergwerksgrube platziert ist.

29. Einrichtung nach Anspruch 25,
**dadurch gekennzeichnet,**
**dass** das Gewächshaus (4) als Pyramide, oder als pyramidaler Körper oder als Quader gestaltet ist.

30. Einrichtung nach einem der vorhergehenden Ansprüche 10 bis 29,
**dadurch gekennzeichnet,**
**dass** zur automatischen Beerntung der Biomasse Schieberelemente, oder eine als Luftbesen bezeichnete Luftdüsenanordnung vorgesehen sind, welche die Biomasse aus den Wannen oder Pflanzgefäßen abstreifen oder durch gezielte Druckluftbeaufschlagung herausschleudert um die Biomasse einer Fördereinrichtung (7) zuführen.

31. Einrichtung nach einem der vorhergehenden Ansprüche 10 bis 30,
**dadurch gekennzeichnet,**
**dass** die Einrichtung eine Biogas-, oder Bioethanolerzeugungseinrichtung, oder eine Wasserstoffherstellungseinrichtung umfasst, in welcher aus der geernteten Biomasse Energieträger erzeugbar sind, und die Abgase und/oder die Abwässer und/oder die Abwärme wieder ins Gewächshaus (4) rückführbar ist.

32. Einrichtung nach Anspruch 31,
**dadurch gekennzeichnet,**
**dass** die Biogas- und/oder Bioethanolerzeugungseinrichtung direkt in der Einrichtung zur Erzeugung der Biomasse integriert oder implementiert ist.

33. Einrichtung nach Anspruch 31 oder 32,
**dadurch gekennzeichnet,**
**dass** die Abgase der Biogas- und/oder Bioethanolerzeugungseinrichtung zusätzlich zur CO₂-reichen Luftdüngung der Biomasse über eine Abgasrückführung in das Gewächshaus leitbar sind.

34. Einrichtung nach einem der vorhergehenden Ansprüche 10 bis 33,
**dadurch gekennzeichnet,**
**dass** innerhalb des Gewächshauses (4) ein oder mehrere Fischzuchtbecken angeordnet sind, in welches das zunächst durch die Pflanzwannen oder Pflanzgefäße (5) geleitete Wasser/Abwasser et vice versa zuführbar ist.

35. Verwendung eines Verfahren nach einem der Ansprüche 1 bis 9 und/oder einer Einrichtung nach einem der Ansprüche 10 bis 34,
**dadurch gekennzeichnet,**
**dass** das Verfahren bzw die Einrichtung für den Betrieb eines Klärbeckens einer Kläranlage eingesetzt wird.

36. Verwendung eines Verfahren nach einem der Ansprüche 1 bis 9 und/oder einer Einrichtung nach einem der Ansprüche 10 bis 34,
**dadurch gekennzeichnet,**
**dass** das Verfahren und/oder die Einrichtung auch zur CO₂-Entgasung einer Abbaugrube, insbesondere einer Kohlegrube eingesetzt wird, indem das entstehende CO₂-haltige Abgas gesammelt und in Wasser unter Bildung von Kohlensäure unter Druck eingesprudelt wird, und das kohlensäurehaltige Wasser zur Düngung verwendet wird.

37. Verwendung eines Verfahren nach einem der Ansprüche 1 bis 9 und/oder einer Einrichtung nach einem der Ansprüche 10 bis 34,
**dadurch gekennzeichnet,**
**dass** das Verfahren und/oder die Einrichtung beim Anfall von CO₂-haltigem Abgas in den Heizanlagen von Wohnhäusern verwendet wird, derart, dass das Abgas unter Druck und Bildung von kohlesäurehaltigem Wasser in Wasser eingesprudelt wird, und über Druckleitungen zur weiteren Verwendung abgeführt wird.

## Claims

1. Process for the biological and eco-friendly conversion of CO₂ into carbon and oxygen, the CO₂ source being waste gases resulting from combustion processes or chemical processes, in which process the waste gas is introduced under pressure into water in an at least partially sealed system with formation of carbonic acid dissolved in water, in which system fast-growing photosynthetically active biomass in the form of aqueous plants or swamp plants is cultivated, where at least part of the biomass consists of lemna which float on said introduced treated water in shallow tanks stacked in a plurality of layers, such that incidence of daylight sufficient for photosynthesis is ensured, and where the biomass is harvested cyclically and further biomass is either generated on its own from remaining biomass or replenished cyclically.

2. Process according to Claim 1, **characterized in that** at least part of the biomass harvested is recycled into said waste gas-generating process for generating energy, for generating energy, in particular in the form of biogas, solid fuel, bioethanol, biodiesel.

3. Process according to Claim 1 or 2, **characterized in that** the carbonic acid-containing water enriched from waste gases is added as required for watering the biomass, by monitoring a fill level such that exactly the same amount of treated water as that taken up and metabolized by the biomass is replenished.

4. Process according to any of Claims 1 to 3, **characterized in that** part of the biomass consists of wheat or similar germ seeds which float in shallow tanks on said introduced treated water.

5. Process according to any of Claims 1 to 3, **characterized in that** part of the biomass consists of cress which floats in shallow tanks on said introduced treated water.

6. Process according to Claim 1, 2 or 3, **characterized in that** the biomass is harvested such that the increasing population of the biomass in the tanks, whose respective area is limited, causes, after a period of growth, a lateral precipitation of excess biomass via a lowered edge of the tanks, and **in that** this then falls in a controlled manner onto a transport means and is sent to further processing.

7. Process according to any of the preceding claims, **characterized in that**, for artificially extending daylight, light, in particular UV light, is supplied to the plants in dark phases.

8. Process according to any of the preceding claims, **characterized in that**, in addition to watering with said treated carbonic acid-rich water the same is introduced in a cooled fogging process into said at least partially sealed system.

9. Process according to any of the preceding claims, **characterized in that** the process is applied below ground in mines or underground cavities by capturing at these locations waste gas or CO₂ introduced or formed below ground and feeding it in the manner described into containers filled with biomass and illuminated artificially for photosynthesis-supported CO₂-metabolization.

10. Installation for the biological conversion of CO₂ into carbon and oxygen for carrying out the process according to any of Claims 1 to 9, comprising a partially sealed system in the form of a greenhouse consisting of several floors in which fast-growing photosynthetically active biomass in the form of aquatic plants or swamp plants is planted in shallow planting tanks (5) filled with water in a large number of floors in a shelf or spillage system, a pressure reservoir by means of which waste gases produced in a combustion process or a chemical process which serve as CO₂ source can be introduced into water for preparing carbonic acid-containing water and a control device which allows said water to be fed into the shallow containers in an amount corresponding to the water taken up by the biomass.

11. Installation according to Claim 10, **characterized in that**, for an improved even supply of light, the tanks on the floors are placed at least partially offset to one another.

12. Installation according to Claim 10 or 11, **characterized in that** the partially sealed system comprises one or more valve or flap devices through which excess gas - oxygen and non-metabolized gas - can be vented in a controlled manner.

13. Installation according to any of Claims 10 to 12, **characterized in that** the roof and/or all lateral walls are arranged in the form of a pyramid or a pyramidal body.

14. Installation according to any of Claims 10 to 12, **characterized in that** an additional illumination device is provided by means of which light, in particular UV-rich light, can be supplied even at night time.

15. Installation according to Claim 14, **characterized in that** the illumination device is fed from a rechargeable battery charged with solar electricity or electricity generated from residual heat.

16. Installation according to any of the preceding Claims 10 to 15, **characterized in that** the partially sealed system is provided as a transportable container, at least the roof of which consists of a material permeable to light, in particular permeable to UV light.

17. Installation according to Claim 16, **characterized in that** the container or at least the light-permeable components of walls and roof of the same are collapsible/foldable like a foldable transport container for the purpose of the transport of the same and can be unfolded on site for the intended use.

18. Installation according to Claim 16 or 17, **characterized in that** the energy generating device or the biogas device or the device for generating bioethanol and the pressure reservoir(s) are each likewise housed in transportable containers.

19. Installation according to any of the preceding Claims 10 to 17, **characterized in that** the partially sealed system is arranged in a stationary room permeable to light, in particular permeable to UV light, like a mobile or stationary greenhouse.

20. Installation according to any of the preceding Claims 10 to 17, **characterized in that** the partially sealed system, i.e. the installation, is lowered into a dug-out soil pit on a field and covered on the top by a roof permeable to light, in particular permeable to UV light, or a film which is permeable to light, in particular permeable to UV light.

21. Installation according to any of the preceding Claims 10 to 17, **characterized in that** the roof is in the form of a pyramid.

22. Installation according to any of the preceding Claims 10 to 21, **characterized in that** the installation for the disposal of CO₂ or CO₂-containing waste gases is placed in an underground cavity or in a mine.

23. Installation according to any of the preceding Claims 10 to 22, **characterized in that** the tanks are shaped as bodies which have a polygonal cross section and can be rotated round an axis, which can be opened and where the biomass lamna can be removed using a scraper.

24. Installation according to any of Claims 10 to 22, **characterized in that** the tanks are provided on the inside with a light sensor such that they can be used to register when a surface has been fully covered by the biomass and initiate harvesting.

25. Installation according to any of the preceding Claims 10 to 24, **characterized in that** a feed of thermal spring water (9) and/or industrial wastewater (2) and/or water from a sewage plant (2) and/or mine drainage water (9) is provided as water supply.

26. Installation according to Claim 25, **characterized in that** the greenhouse (4) consists of a gutted factory building or a gutted high-rise building or a gutted cooling tower of a power plant or a gutted water tower which is provided with glass or a film permeable to light.

27. Installation according to Claim 25, **characterized in that** the greenhouse (4) consists of a cylindrical building or a building having a polygonal cross section which is provided with glass or film permeable to light and surrounds the standing tower (11) of a wind turbine (10).

28. Installation according to Claim 25, **characterized in that** the installation is placed in the immediate vicinity of a thermal spring or an industrial plant or a sewage treatment plant or a mine.

29. Installation according to Claim 25, **characterized in that** the greenhouse (4) is arranged in the form of a pyramid or a pyramidal body or a cuboid.

30. Installation according to any of the preceding Claims 10 to 29, **characterized in that** sliding elements or an air nozzle arrangement referred to as air blower are/is provided for automatic harvesting of the biomass, which strip or, by targeted application of pressurized air, eject the biomass from the tanks or planting vessels to feed the biomass to a transport device (7).

31. Installation according to any of the preceding Claims 10 to 30, **characterized in that** the installation comprises a device for generating biogas or bioethanol or a device for generating hydrogen capable of generating energy carriers from the biomass harvested and recycling the waste gases and/or the wastewaters and/or the waste heat to the greenhouse (4).

32. Installation according to Claim 31, **characterized in that** the device for generating biogas and/or bioethanol is integrated or implemented directly into the device for generating the biomass.

33. Installation according to Claim 31 or 32, **characterized in that** the waste gases of the device for generating biogas and/or bioethanol can, in addition to fertilization of the biomass with CO₂-rich air, be fed into the greenhouse via waste gas recycling.

34. Installation according to any of the preceding Claims 10 to 33, **characterized in that** within the greenhouse (4) one or more fish farming basins are arranged into which the water/wastewater initially conducted through the planting tanks or planting vessels (5) can be fed, and vice versa.

35. Use of a process according to any of Claims 1 to 9 and/or an installation according to any of Claims 10 to 34, **characterized in that** the process or the installation is employed for operating a clarifying basin in a sewage treatment plant.

36. Use of a process according to any of Claims 1 to 9 and/or an installation according to any of Claims 10 to 34, **characterized in that** the process and/or the installation is/are also employed for CO₂-degassing of a mine, in particular a coal mine, by collecting the CO₂-containing waste gas formed and bubbling it into water under pressure, with formation of carbonic acid, and the carbonic acid-containing water is used for fertilizing.

37. Use of a process according to any of Claims 1 to 9 and/or an installation according to any of Claims 10 to 34, **characterized in that** the process and/or the installation is/are used when CO₂-containing waste gas is formed in the heating systems of residential houses, such that the waste gas is bubbled into water under pressure and with formation of carbonic acid-containing water and, via pressurized lines, discharged for further use.

## Revendications

1. Procédé de transformation biologique et écologiquement compatible de CO₂ en carbone et en oxygène, des gaz d'échappement de procédés de combustion ou de procédés chimiques servant de source de CO₂, selon lequel le gaz d'échappement est introduit sous pression dans de l'eau pour former de l'acide carbonique dissous dans l'eau dans un système au moins partiellement fermé, dans lequel une biomasse photosynthétique à croissance rapide se développe sous la forme de plantes aquatiques ou hélophytes, au moins une partie de la biomasse étant constituée de lenticules qui flottent dans l'eau préparée introduite mentionnée dans des bassins plats, stratifiés en plusieurs couches, de manière à assurer une lumière du jour incidente suffisante pour la photosynthèse, la biomasse étant récoltée cycliquement et davantage de biomasse soit se propageant automatiquement à partir de la biomasse restante, soit étant complétée cycliquement.

2. Procédé selon la revendication 1, **caractérisé en ce qu'**au moins une partie de la biomasse récoltée est recyclée dans ledit procédé d'obtention d'énergie générant des gaz d'échappement pour l'obtention d'énergie, notamment sous la forme de biogaz, de combustible sec, de bioéthanol, de biodiesel.

3. Procédé selon la revendication 1 ou 2, **caractérisé en ce que** l'eau contenant de l'acide carbonique enrichie à partir de gaz d'échappement est introduite selon les besoins pour l'irrigation de la biomasse, en surveillant un niveau de remplissage de manière à ce qu'exactement la quantité d'eau préparée qui est absorbée et métabolisée par la biomasse soit introduite.

4. Procédé selon l'une quelconque des revendications 1 à 3, **caractérisé en ce qu'**une partie de la biomasse est constituée de blé ou de graines germées semblables, qui flottent dans l'eau préparée introduite mentionnée dans des bassins plats.

5. Procédé selon l'une quelconque des revendications 1 à 3, **caractérisé en ce qu'**une partie de la biomasse est constituée de cresson, qui flotte dans l'eau préparée introduite mentionnée dans des bassins plats.

6. Procédé selon la revendication 1, 2 ou 3, **caractérisé en ce que** la récolte de la biomasse a lieu de manière à ce que la population croissante de la biomasse des bassins respectifs limités en superficie provoque après un temps de croissance une chute latérale de la biomasse en surplus au-dessus d'un bord abaissé des bassins, et à ce que celle-ci chute alors d'une manière contrôlée sur un dispositif de transport et soit transportée vers la transformation ultérieure.

7. Procédé selon l'une quelconque des revendications précédentes, **caractérisé en ce que** de la lumière, notamment de la lumière UV, est introduite pendant les phases sombres pour le prolongement artificiel de la lumière du jour des plantes.

8. Procédé selon l'une quelconque des revendications précédentes, **caractérisé en ce qu'**en plus de l'irrigation avec ladite eau riche en acide carbonique préparée, cette même eau est introduite dans ledit système au moins partiellement fermé par le procédé de nébulisation à froid.

9. Procédé selon l'une quelconque des revendications précédentes, **caractérisé en ce que** le procédé est utilisé en souterrain dans des mines ou dans des cavités souterraines par capture souterraine de gaz d'échappement ou de CO₂ introduit ou formé et introduction dans des contenants remplis de biomasse et éclairés artificiellement pour le métabolisme assisté par photosynthèse du CO₂.

10. Dispositif pour la transformation biologique de CO₂ en carbone et oxygène, pour la réalisation du procédé selon l'une quelconque des revendications 1 à 9, comprenant :
un système partiellement fermé sous la forme d'une serre constituée de plusieurs étages, dans lequel une biomasse photosynthétique à croissance rapide est plantée sous la forme de plantes aquatiques ou hélophytes dans des bassins à plantes plats remplis d'eau (5) sur une pluralité d'étages dans un système à rayons ou tréteaux, un accumulateur de pression au moyen duquel des gaz d'échappement formés servant de source de CO₂, issus d'un procédé de combustion ou chimique, peuvent être introduits dans de l'eau pour la préparation d'eau contenant de l'acide carbonique, et un dispositif de réglage, par le biais duquel cette eau peut être introduite dans les contenants plats en la quantité de l'eau absorbée par la biomasse.

11. Dispositif selon la revendication 10, **caractérisé en ce que** les bassins des étages sont placés de manière au moins partiellement décalée les uns par rapport aux autres pour améliorer l'uniformité de l'apport de lumière.

12. Dispositif selon la revendication 10 ou 11, **caractérisé en ce que** le système partiellement fermé contient un ou plusieurs dispositifs à vanne ou clapet, par lesquels les gaz en surplus, l'oxygène et le gaz non métabolisé, peuvent être déchargés de manière contrôlée.

13. Dispositif selon l'une quelconque des revendications 10 à 12, **caractérisé en ce que** le toit et/ou toutes les parois latérales sont configurés sous la forme d'une pyramide ou d'un corps pyramidal.

14. Dispositif selon l'une quelconque des revendications 10 à 12, **caractérisé en ce qu'**un dispositif d'éclairage supplémentaire est prévu, au moyen duquel de la lumière, notamment de la lumière riche en UV, peut être introduite même pendant la nuit.

15. Dispositif selon la revendication 14, **caractérisé en ce que** le dispositif d'éclairage est alimenté à partir d'un accumulateur chargé avec un courant solaire ou un courant électrique dérivé d'une génération d'énergie à partir de chaleur résiduaire.

16. Dispositif selon l'une quelconque des revendications 10 à 15 précédentes, **caractérisé en ce que** le système partiellement fermé est configuré sous la forme d'un contenant transportable, qui est constitué au moins du côté du toit par un matériau translucide, notamment translucide aux UV.

17. Dispositif selon la revendication 16, **caractérisé en ce que** le contenant ou au moins les constituants de paroi et de plafond translucides sont pliables/repliables pour le transport et dépliables sur le site pour l'utilisation normale, à la manière d'un contenant de transport pliable.

18. Dispositif selon la revendication 16 ou 17, **caractérisé en ce que** le dispositif de génération d'énergie ou de biogaz ou le dispositif de génération de bioéthanol, ainsi que le ou les accumulateurs de pression, sont chacun logés dans des contenants transportables.

19. Dispositif selon l'une quelconque des revendications 10 à 17 précédentes, **caractérisé en ce que** le système partiellement fermé est agencé dans un espace stationnaire, translucide, notamment translucide aux UV, à la manière d'une serre mobile ou stationnaire.

20. Dispositif selon l'une quelconque des revendications 10 à 17 précédentes, **caractérisé en ce que** le système partiellement fermé, c.-à-d. le dispositif, est abaissé dans une cavité creusée dans le sol dans un champ et recouvert en haut par un toit translucide, notamment translucide aux UV, ou un film translucide, notamment translucide aux UV.

21. Dispositif selon l'une quelconque des revendications 10 à 17 précédentes, **caractérisé en ce que** le toit est configuré sous forme pyramidale.

22. Dispositif selon l'une quelconque des revendications 10 à 21 précédentes, **caractérisé en ce que** le dispositif pour l'évacuation de CO₂ ou de gaz d'échappement contenant du CO₂ est placé dans une cavité souterraine ou une mine.

23. Dispositif selon l'une quelconque des revendications 10 à 22 précédentes, **caractérisé en ce que** les bassins sont configurés sous la forme de corps de section polygonale, rotatifs autour d'un axe, qui peuvent être ouverts, et des lenticules de la biomasse peuvent être extraites avec un racloir.

24. Dispositif selon l'une quelconque des revendications 10 à 22, **caractérisé en ce que** les bassins sont munis à l'intérieur d'un capteur de lumière, de manière à ce que celui-ci permette de déterminer la formation par la biomasse d'une surface fermée et de déclencher la récolte.

25. Dispositif selon l'une quelconque des revendications 10 à 24 précédentes, **caractérisé en ce qu'**une introduction d'eau de source thermale (9) et/ou d'eau résiduaire industrielle (2) et/ou d'eau limpide (2) et/ou d'eau de mine (9) est prévue pour l'alimentation en eau.

26. Dispositif selon la revendication 25, **caractérisé en ce que** la serre (4) est constituée d'un bâtiment d'usine dégarni ou d'un immeuble dégarni ou d'une tour de refroidissement dégarnie d'une centrale électrique ou d'un château d'eau dégarni, qui est muni ou qui est munie de verre ou d'un film translucide.

27. Dispositif selon la revendication 25, **caractérisé en ce que** la serre (4) est constituée d'un bâtiment cylindrique ou d'un bâtiment de section polygonale, qui est muni d'un film translucide ou de verre, et entoure la tour (11) d'une éolienne (10).

28. Dispositif selon la revendication 25, **caractérisé en ce que** le dispositif est placé à proximité directe d'une source thermale ou d'une exploitation industrielle ou d'une station d'épuration de l'eau ou d'une mine.

29. Dispositif selon la revendication 25, **caractérisé en ce que** la serre (4) est configurée sous la forme d'une pyramide ou d'un corps pyramidal ou d'un parallélépipède rectangle.

30. Dispositif selon l'une quelconque des revendications 10 à 29 précédentes, **caractérisé en ce que** des éléments glissières ou un agencement de buses à air nommé balai à air sont prévus pour la récolte automatique de la biomasse, qui raclent la biomasse des bassins ou des récipients à plantes ou qui l'éjectent par une injection ciblée d'air comprimé afin de transférer la biomasse dans un dispositif de transport (7).

31. Dispositif selon l'une quelconque des revendications 10 à 30 précédentes, **caractérisé en ce que** le dispositif comprend un dispositif de génération de biogaz ou de bioéthanol ou un dispositif de fabrication d'hydrogène, dans lequel des sources d'énergie peuvent être générées à partir de la biomasse récoltée, et les gaz d'échappement et/ou l'eau résiduaire et/ou la chaleur résiduaire peuvent être recyclés dans la serre (4).

32. Dispositif selon la revendication 31, **caractérisé en ce que** le dispositif de génération de biogaz et/ou de bioéthanol est intégré ou implanté directement dans le dispositif de génération de biomasse.

33. Dispositif selon la revendication 31 ou 32, **caractérisé en ce que** les gaz d'échappement du dispositif de génération de biogaz et/ou de bioéthanol peuvent également être introduits dans la serre pour la fertilisation par de l'air riche en CO₂ de la biomasse par une conduite de recyclage des gaz d'échappement.

34. Dispositif selon l'une quelconque des revendications 10 à 33 précédentes, **caractérisé en ce qu'**un ou plusieurs bassins piscicoles sont agencés dans la serre (4), dans lesquels l'eau/l'eau résiduaire tout d'abord conduite dans les bassins à plantes ou les récipients à plantes (5) peut être introduite et vice-versa.

35. Utilisation d'un procédé selon l'une quelconque des revendications 1 à 9 et/ou d'un dispositif selon l'une quelconque des revendications 10 à 34, **caractérisée en ce que** le procédé ou le dispositif est utilisé pour l'exploitation d'un bassin de décantation d'une station d'épuration de l'eau.

36. Utilisation d'un procédé selon l'une quelconque des revendications 1 à 9 et/ou d'un dispositif selon l'une quelconque des revendications 10 à 34, **caractérisée en ce que** le procédé et/ou le dispositif sont également utilisés pour le dégazage du CO₂ d'une excavation, notamment d'une mine de charbon, par recueillement du gaz d'échappement contenant du CO₂ formé et barbotage sous pression dans de l'eau pour former de l'acide carbonique, et utilisation de l'eau contenant de l'acide carbonique pour la fertilisation.

37. Utilisation d'un procédé selon l'une quelconque des revendications 1 à 9 et/ou d'un dispositif selon l'une quelconque des revendications 10 à 34, **caractérisée en ce que** le procédé et/ou le dispositif sont utilisés lors de la formation d'un gaz d'échappement contenant du CO₂ dans les installations de chauffage de maisons d'habitation, le gaz d'échappement étant barboté dans de l'eau sous pression et avec formation d'eau contenant de l'acide carbonique, et évacué vers l'utilisation ultérieure par des conduites sous pression.
